# EUROPEAN PATENT SPECIFICATION

(11) **EP 2 480 114 B1**
(45) Date of publication and mention of the grant of the patent: **15.01.2014**
(21) Application number: 10763515.3
(22) Date of filing: 22.09.2010
(51) Int. Cl.: A47J 31/00, A47J 31/58

(54) **AUTOMATICALLY ADJUSTING COFFEE MAKERS**
AUTOMATISCH JUSTIERENDE KAFFEMASCHINE
CAFETIÈRES À AJUSTEMENT AUTOMATIQUE

(30) Priority: 22.09.2009 US 244569 P
(43) Date of publication of application: 01.08.2012
(73) Proprietor: Mag Aerospace Industries, Inc. D/B/A Monogram Systems, Carson, CA 90746-4012 (US)
(72) Inventor: JIMENEZ, Marcos, Charles Town, WV 25414 (US); RICHARDS, Scott, S. Riding, VA 20152 (US)
(74) Representative: Phillips & Leigh
(86) International application number: PCT/US2010/049749
(87) International publication number: WO 2011/037952

(56) References cited:
- EP-A1- 0 267 649
- EP-A1- 0 387 515
- EP-A1- 1 369 068
- US-A1- 2004 035 197

## Description

### FIELD OF THE INVENTION

The present invention relates generally to coffee makers, and specifically, to coffee makers for use at varying altitudes. Specific embodiments relate to coffee makers for use on-board aircraft. The invention provides automatically adjusting brew temperatures, depending upon the altitude of and/or pressures exerted on the coffee maker.

### BACKGROUND

Freshly brewed coffee generally tastes best when it is brewed at the highest temperature possible. However, coffee brewed on aircraft with current aircraft coffee makers suffers from less than optimal quality, partially due to lower than optimum brewing temperatures. Water boils at different temperatures, depending upon the air pressure at varying altitudes, but current coffee makers do not account for these differences. They are set to brew coffee below the boiling point of water at high cabin pressure, even when the aircraft is on the ground.

The atmosphere of air surrounding the earth creates a pressure. The pressure at sea level is 9.8692 × 10⁶ (one atmosphere (14.696 pounds per square inch (psi)), or about 760mm (approx. 30 inches of mercury, 30" Hg)) in a column. As altitude increases, air density decreases, which means that the pressure decreases. As the pressure drops, the temperature at which water boils lowers. (Ambient air pressure affects how fast the molecules of liquid must move in order to leave the liquid phase and transition into the gas phase.)

Although it is the barometric pressure that creates the difference in boiling point at varying altitudes (at higher elevations, the barometric pressure usually drops, but water will boil at two different temperatures at the same elevation if there is a high pressure weather system vs. a low pressure system), it is possible to calculate various barometric pressures and approximate corresponding altitudes under normal conditions. For example, under normal conditions at sea level, the boiling point of water is 100 degrees Celsius (212 degrees Fahrenheit). For every 152.4m (500-foot) increase in elevation, the boiling point generally drops about 0.49995 degree Celsius (0.9 degree Fahrenheit). Thus, at a city of 1524m (5,000 feet) above sea level, water boils at about 93.9 Celsius (about 201 degrees Fahrenheit). At approximately 3048m (approximately 10,000 feet) above sea level, water boils at about 90 degrees Celsius (about 194 degrees Fahrenheit) and so forth.

The ideal temperature for brewing coffee at sea level is about 93.3 degrees Celsius (about 200 degrees Fahrenheit), which is the temperature at which most residential and commercial drip coffee makers operate. However, even though aircraft coffee makers are sometimes operated on the ground (e.g., while coffee is being served pre-flight), as well as at high altitudes (e.g., during in-flight service), and even though water has a substantially lower boiling point in flight, safety considerations require coffee makers used on board aircraft to be universally configured to brew coffee at lower temperatures. The required lower temperatures are due to lower than standard atmospheric cabin pressures during flight, which are normally between about 1.8-2.4 km (about 6,000-8,000 feet). Water boils at a lower temperature at these altitudes, and therefore, coffee maker brewing temperature set-points are set below the boiling point at these altitudes in order to prevent constant boiling in the hot water brewer tanks when the aircraft is in flight. As such, aircraft coffee makers are permanently set to heat water to a point below the typical coffee maker temperature, without regard to the atmospheric pressure or altitude of the aircraft. As a result, conventional aircraft coffee makers do not brew at the optimal temperature when the aircraft is on the ground, and the resulting coffee does not have the most optimal taste.

US patent application publication number US 2004/0035197 A1 describes an aircraft coffee maker which moderates the boiling temperature based on the expected cabin pressure.

### BRIEF SUMMARY

The present invention is as set out in the claims, and provides improved coffee maker brew temperature features designed to detect aircraft cabin pressure and/or altitude and to adjust the brewing temperate accordingly, so that the boiling point is optimal, providing the best possible tasting coffee.

The coffee maker may comprise a memory comprising a computer-readable storage medium tangibly embodying code representing received information about altitude or pressure or both and further comprising executable instructions; a processor configured to execute the instructions to determine a brewing configuration based on the altitude or pressure or both and output a control signal to a coffee maker heater; and a heater configured to adjust brewing temperature in response to the control signal.

### BRIEF DESCRIPTION OF THE DRAWINGS

FIG. 1 shows a schematic flow chart of one embodiment of data bus communication with a coffee maker controller board that communicates with a coffee maker heater and temperature sensor.
FIG. 2 shows a schematic flow chart of one embodiment of data communication and subsequent alteration of the coffee maker temperature.
FIG. 3 shows a schematic flow chart of one embodiment of communication between a coffee maker heater and an on-board sensor.
FIG. 4 shows a block diagram of one embodiment of a temperature-adjusting configuration.

### DETAILED DESCRIPTION

Embodiments of the present invention provide coffee makers that are specifically designed for particular use on-board aircraft or any vehicle designed to operate at varying altitudes and/or pressures. Coffee makers described herein are capable of receiving information about the coffee maker's altitude and/or the cabin pressure, and adjusting (via increasing or decreasing) brew temperatures accordingly. The described embodiments are particularly useful for coffee makers that are mounted on-board an aircraft, which brew coffee at ground level, as well as at thousands of feet of altitude. It should also be understood that coffee makers intended for use at varying altitudes or pressure situations (above or below sea level, such as coffee makers aboard submarines, coffee makers used in high altitude locations or otherwise mountainous regions) may benefit from the features described herein. It is desirable to provide improved brewing temperature management by monitoring and providing data about pressure and/or altitude, and allowing adjustability for coffee makers at varying conditions.

Coffee makers described herein seek to brew coffee at the hottest, yet safest, temperature possible. In order to do this, the coffee maker is designed to adjust its brewing temperature depending upon air pressure and/or altitude. There are multiple ways to deliver this relative information to coffee makers. (For convenience, the remainder of this document will refer to coffee makers for use on-board aircraft, but it should be understood that various embodiments described herein may be used in connection with any coffee makers for use in varying altitude environments.)

The coffee makers described herein generally use detection of cabin pressure as an input to a software-controlled heater output in order to adjust the temperature of the hot water used to make coffee on the aircraft. When the aircraft is on the ground, cabin pressure is usually higher, and therefore, the boiling point of water is higher. By receiving information about and adjusting to the altitude and/or cabin air pressure, the brewer is able to brew at optimum temperature. Upon take-off and climb, the aircraft pressure is reduced and the boiling point is subsequently lower. Input about the altitude and/or cabin pressure allows the coffee maker heater to adjust and automatically lower the brewer temperature to below boiling, or an appropriate and safe brewing temperature. This adjustment and input may be done continually or incrementally.

In one embodiment, the coffee maker itself has a sensor that indicates the on-board pressure and/or the altitude of the aircraft. The sensor may be mounted anywhere on the coffee maker, as long as it can communicate (directly or indirectly) with the coffee maker heater and/or temperature sensor. In a specific embodiment, the sensor is a pressure sensor that delivers information about the pressure of the air surrounding the coffee maker to the heating system, which can adjust the brewing temperature to the optimal setting. (The sensor may relay information to the coffee maker computing system (processor and memory) in order for the system to execute the required adjustments.) In an alternate embodiment, the sensor is an altitude sensor, which delivers information about the current altitude to the coffee maker computing system and heater.

In a further embodiment, the coffee maker communicates with the on-board equipment in order to receive input and information about the on-board pressure and/or the altitude of the aircraft. The information may be sent wirelessly or the coffee maker may plug directly into the aircraft information equipment.

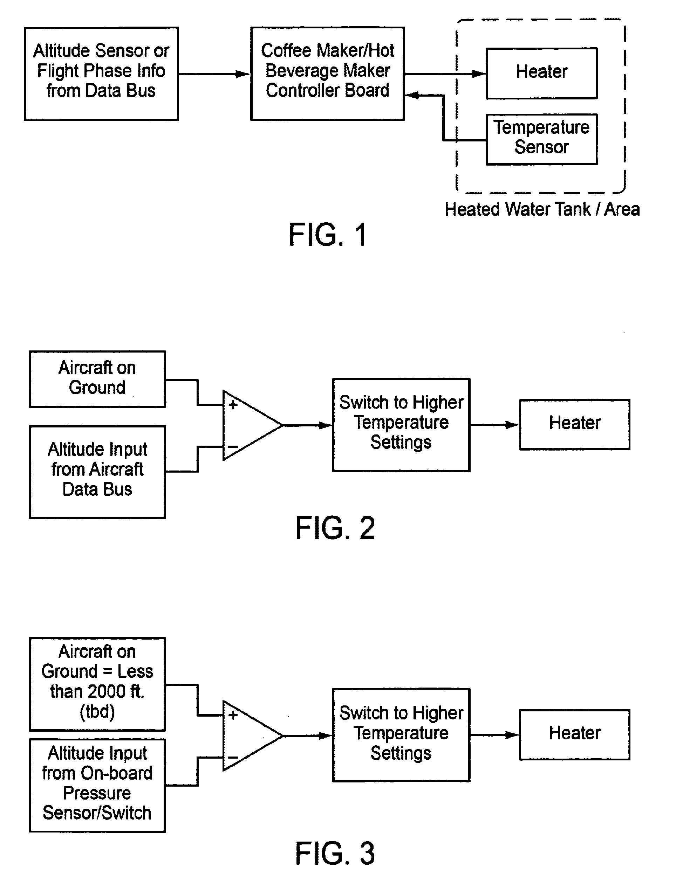

In the embodiment illustrated schematically in FIG. 3, the aircraft equipment can relay information about the aircraft's altitude to the coffee maker. If the aircraft is on the ground or less than 609.6m (2000 feet (or any other pre-set low altitude), the aircraft equipment relays that information to the coffee maker processor or computing device, which executes a program that relays instructions to the heater to brew at a higher specified temperature setting. If the aircraft has passed the pre-set low altitude setting, the processor will execute and relay instructions to the heater to default to safer, lower brew temperatures. This may be referred to as a high/low altitude brew temperature option, based on the aircraft altitude. It is also possible to provide a more detailed input that allows the temperatures to be varied depending upon more specific altitude ranges and/or more specific information about the cabin pressure.

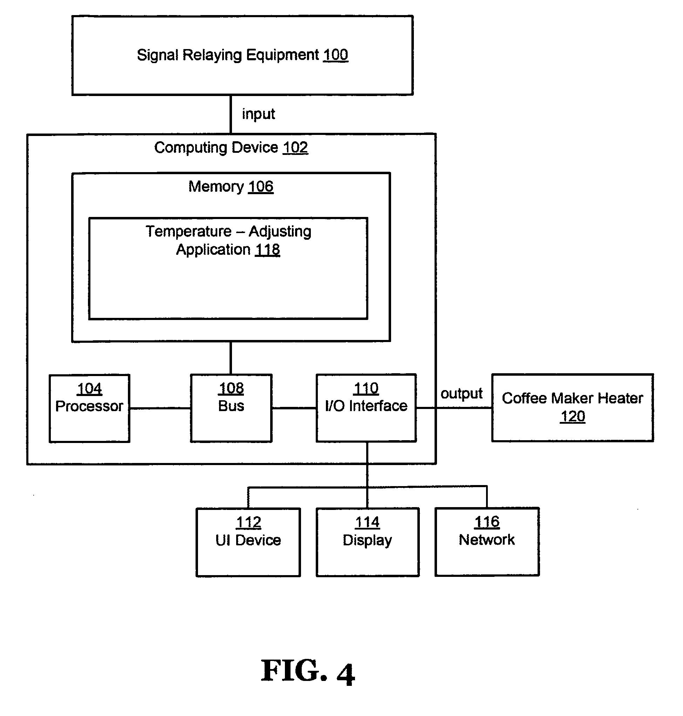

In one specific embodiment, the memory/processor/computing device may be located directly on the coffee maker. The coffee maker memory can contain an application or code that receives information and executes a "decision" about the brewing temperature based on the data received in the signal. For example, if the aircraft signal relays that the aircraft in on the ground, at sea level, or at an accompanying related ambient pressure, the coffee maker processor receives that signal in a computer-readable media that tangibly embodies computer-readable instructions which, when executed, cause the heater to brew at a higher temperature (e.g., at or around 90.6-93.3 degrees Celsius (around 195-200 degrees Fahrenheit)). An example of such a system is illustrated in FIG. 4 (described further below), and may be referred to collectively as a "temperature-adjusting application." If software is utilized, the software may comprise one or more components, processes, and/or applications. Alternatively, hardware may be utilized to implement the temperature-adjusting application, i.e., without executing software. For example, a mechanical mechanism may be used to detect pressure change and actuate a temperature control. Additionally or alternatively, the coffee maker computing device(s) may comprise circuitry that renders the device(s) operative to implement one or more of the methods of the present subject matter.

If the aircraft signal relays that the aircraft is at a higher, cruising altitude, the coffee maker computing device or processor receives that signal in a tangible computer readable medium and causes the heater the brew coffee at a lower, safer temperature (e.g., at or around 85-87.8 degrees Celsius (around 185-190 degrees Fahrenheit)).

The coffee maker processing device, such as a microprocessor, can have a memory that interfaces with and receives input from the signal relaying equipment 100 (either on-board the aircraft or on-ground) and configures the processor to relay instructions to the heater 120 to brew at one or more temperature settings, based on the data relayed by the signal relaying equipment. In some embodiments, the memory can comprise a RAM, ROM, cache, a hard disk, a removable disk, or another type of memory or any other storage medium capable of being accessed by a processing device. In any event, memory is used to store the program code that configures the processing device to determine the brewing temperature instructions and execution data. See for example, FIG. 4.

A further embodiment illustrated in FIGS. 1 and 2 provides input to the coffee maker about aircraft conditions (either pressure and/or altitude) via a data bus or other external data collection system. The data bus may be a physical and electrical interface of a two-wire data bus (a subsystem that transfers data between computers or processors) and a data protocol to support an aircraft's avionics local area network. There are systems (available and currently in development) that provide varying degrees of information about the aircraft to the optional equipment on board. The general basis for such systems is that they help manage power. Aircraft take-off requires extra electrical power. As such, it is preferred that optional equipment (i.e., coffee makers, air conditioners, audiovisual equipment, and so forth) not run during take-off (and other high power consumption periods) in order to conserve power for the aircraft engines. Specific embodiments of a data bus or a data collection and communication system can communicate directly with the galley and/or catering equipment in order to manage (and in some instances, shut off) equipment based on the aircraft's needs and power consumption. The data bus may either act as a master controller that shuts off certain optional equipment that may burden the aircraft power system or it may send signals and each piece of equipment may have a processor/memory/computing system that executes instructions based on data received. Rather than using large generators on board the aircraft in order to power optional equipment, the data bus communication system prevents that extra weight and expense by better managing optional equipment, such as catering equipment like coffee makers. An exemplary data bus and interface system is being developed by Aeronautical Radio, Inc. (as the 800 series, e.g., ARINC 810 and 812). However, it should be understood that any data communication system may be used and is considered within the scope of embodiments of this invention.

Information may be passed through these data systems to on-board catering equipment. For example, the fact that the aircraft in on the ground may be communicated to the galley equipment so that the equipment can be powered as usual. This information can also be transmitted to the coffee makers, which will allow the temperature setting to be set at a first (i.e., higher) temperature level. (Again, the data bus computers may contain an application or code that send an "execute" message to the coffee maker or the data bus computers may send data only, and the coffee maker may have a processor that runs a program in order to make and "execute" the desired temperature adjustment.) In either event, the storage medium is a tangible computer readable medium contained in a processor that can execute an application that receives input or other data about altitude and/or pressure, and alters the heating function accordingly.

In practice, the coffee maker may receive the signal, execute a program based on that signal, and set the brewing temperature at a first on-ground temperature. Then, the fact that the aircraft has taken off may be communicated via a signal to the galley equipment (including the coffee maker), and that input signal can cause the equipment to power down and otherwise conserve energy. Finally, the fact that the aircraft has reached a specific higher cruising altitude may also be communicated, indicating to the coffee maker that the heater should brew at a second (i.e., lower) temperature.

These systems can also be beneficial in relaying information about altitude and pressure, particularly when an aircraft is docked at the gate in a high altitude location (e.g., Denver or any other mountainous location). In that instance, the fact that the aircraft is on the ground is not as important as the actual altitude (e.g., how far above sea level) and the cabin pressure that is being exerted.

The various systems discussed herein are not limited to any particular hardware architecture or configuration. A coffee maker processor or memory or computing device can include any suitable arrangement of components that provide a result conditioned on one or more inputs. Suitable computing devices include multipurpose and specialized microprocessor-based computer systems accessing stored software, but also application-specific integrated circuits and other programmable logic, and combinations thereof. Any suitable programming, scripting, or other type of language or combinations of languages may be used to construct program components and code for implementing the teachings contained herein.

Embodiments of the methods disclosed herein may be executed by one or more suitable computing devices. Such system(s) may comprise one or more computing devices adapted to perform one or more embodiments of the methods disclosed herein. As noted above, such devices may access one or more computer-readable media that embody computer-readable instructions which, when executed by at least one computer, cause the at least one computer to implement one or more embodiments of the methods of the present subject matter. When software is utilized, the software may comprise one or more components, processes, and/or applications. Additionally or alternatively to software, the computing device(s) may comprise circuitry that renders the device(s) operative to implement one or more of the methods of the present subject matter.

Any suitable non-transitory computer-readable medium or media may be used to implement or practice the presently-disclosed subject matter, including, but not limited to, diskettes, drives, magnetic-based storage media, optical storage media, including disks (including CD-ROMS, DVD-ROMS, and variants thereof), flash, RAM, ROM, and other memory devices, and the like.

Another embodiment allows the user to manually input information about the pressure and/or altitude of the coffee maker. This may be a simpler system for manufacturing purposes, although it may complicate the brewing process from the user's perspective.

FIG. 4 depicts a system that is capable of automatically adjusting coffee brewing temperatures at varying altitudes and/or pressures according to certain embodiments. Other embodiments may be utilized. The system includes a computing device 102 having a processor 104 that can execute code stored on a computer-readable medium, such as a memory 106, to cause the computing device 102 to adjust or cause the coffee maker heater to adjust temperature accordingly. The computing device 102 may be any device that can process data and execute code that is a set of instructions to perform actions. Examples of the computing device 102 may be installed directly on the coffee maker, may be associated with on the on-board equipment, or may be integrated as a part of an externally-located data bus or communication system. Computing device 102 may include a desktop personal computer, a laptop personal computer, a server device, a handheld computing device, a mobile device, or any other appropriate computing system.

Examples of the processor 104 may include a microprocessor, an application-specific integrated circuit (ASIC), a state machine, or other suitable processor. The processor 104 may include one processor or any number of processors. The processor 104 can access code stored in the memory 106 via a bus 108. The memory 106 may be any tangible computer-readable medium capable of storing code. The memory 106 can include electronic, magnetic, or optical devices, capable of providing processor 104 with executable code. Examples of the memory 106 include random access memory (RAM), read-only memory (ROM), a floppy disk, compact disc, digital video device, magnetic disk, an ASIC, a configured processor, or other storage device capable of tangibly embodying code. The bus 108 may be any device capable of transferring data between components of the computing device 102. The bus 108 can include one device or multiple devices.

The computing device 102 can share data with additional components through an input/output (I/O) interface 110. The I/O interface 110 can include a USB port, an Ethernet port, a serial bus interface, a parallel bus interface, a wireless connection interface, or any suitable interface capable of allowing data transfers between the computing device and another component.

The output is delivered to the coffee maker heater 120, and the heater 120 is directed to adjust accordingly, based on the information relayed to it.

Additional (but optional) components which can be particularly useful in the manual input of information embodiment can include a user interface (UI) device 112, a display 114, and/or a network 116. The UI device 112 can include a keyboard, a mouse device, a touch screen interface, a switch, a sensor, a button, or other device capable of receiving commands from a user and providing the commands to the computing device 102. The display 114 can include a liquid crystal display (LCD), a plasma screen, cathode ray tube (CRT), or any device capable of displaying images generated by the computing device 102. The network 116 can include the internet, an intranet, wide area network (WAN), local area network (LAN), virtual private network (VPN), or any suitable communications network that allows computing device 102 to communicate with other components.

Instructions can be stored in the memory 106 as executable code. The instructions can include processor-specific instructions generated by a compiler and/or an interpreter from code written in any suitable computer-programming language, such as C, C++, C#, Visual Basic, Java, Python, Perl, JavaScript, and ActionScript. The instructions can include a temperature-adjusting application 118 that, when executed by the processor 104, can cause the computing device 102 to send instructions to the heater to either raise or lower the brewing temperature.

This exemplary system configuration is provided merely to illustrate a potential configurations that can be used to implement certain embodiments. Other configurations may of course be utilized.
Changes and modifications, additions and deletions may be made to the structures and methods recited above and shown in the drawings without departing from the scope of the invention and the following claims.

## Claims

1. A coffee maker configured for use at varying altitudes, comprising a heater (120) and means to adjust coffee brewing temperature, **characterized in that** the coffee maker is configured to adjust brewing temperature in response to information received on detected altitude and/or cabin pressure.

2. The coffee maker of claim 1 for use on an aircraft.

3. The coffee maker of claim 2, wherein the system receives said information directly from aircraft equipment.

4. The coffee maker of claim 1, wherein the system receives said information from a data bus.

5. The coffee maker of claim 1, wherein the system receives said information via manual input.

6. The coffee maker of claim 1, wherein the heater (120) is configured to brew coffee at a first temperature and at a second temperature.

7. The coffee maker of claim 6, wherein the heater (120) is configured to brew coffee at the first temperature at low altitudes and at the second temperature at high altitudes.

8. The coffee maker of claim 1, wherein said information is received in a tangible computer readable medium.

9. The coffee maker of claim 1, further comprising::
(a) a memory (106) comprising a computer-readable storage medium tangibly embodying code representing said information and further comprising executable instructions;
(b) a processor (104) configured to execute the instructions to determine a brewing configuration based on said information and output a control signal to the coffee maker heater (120).

## Patentansprüche

1. Kaffeemaschine konfiguriert zur Verwendung in verschiedenen Flughöhen, die einen Heizer (120) und ein Mittel zum Einstellen der Kaffeebrühtemperatur aufweist, **dadurch gekennzeichnet, dass** die Kaffeemaschine die Brühtemperatur in Abhängigkeit der Information der erfassten Flughöhe und / oder des Kabinendrucks einstellt.

2. Kaffeemaschine nach Anspruch 1 zur Verwendung in einem Flugzeug.

3. Kaffeemaschine nach Anspruch 1, **dadurch gekennzeichnet, dass** das System die Informationen direkt von der Flugzeugausrüstung empfängt.

4. Kaffeemaschine nach Anspruch 1, **dadurch gekennzeichnet, dass** das System die Informationen von einem Datenbus empfängt.

5. Kaffeemaschine nach Anspruch 1, **dadurch gekennzeichnet, dass** das System die Informationen über eine manuelle Eingabe empfängt.

6. Kaffeemaschine nach Anspruch 1, **dadurch gekennzeichnet, dass** die Heizvorrichtung (120) konfiguriert ist, um Kaffee bei einer ersten Temperatur und bei einer zweiten Temperatur zu brühen.

7. Kaffeemaschine nach Anspruch 6, **dadurch gekennzeichnet, dass** die Heizvorrichtung (120) konfiguriert ist, um Kaffee bei der ersten Temperatur bei niedrigen Flughöhen und bei einer zweiten Temperatur bei hohen Flughöhen zu brühen.

8. Kaffeemaschine nach Anspruch 1, **dadurch gekennzeichnet, dass** die Informationen in einem greifbaren, computerlesbaren Medium enthalten sind.

9. Kaffeemaschine aus Anspruch 1, ferner umfassend:
(a) einen Speicher (106), umfassend ein greifbares, computerlesbares Speichermedium, dass den Code für die Informationen zu einer bestimmten Brühkonfiguration und weitere ausführbare Befehle enthält;
(b) einen Prozessor (104) konfiguriert, um basierend auf den Informationen die Befehle zu einer bestimmten Brühkonfiguration auszuführen und ein Kontrollsignal an die Kaffeemaschinenheizvorrichtung (120) herauszugeben.

## Revendications

1. Cafetière configurée pour être utilisée à diverses altitudes, comprenant un élément chauffant (120) et des moyens pour ajuster la température d'infusion du café, **caractérisée en ce que** la cafetière est configurée pour ajuster la température d'infusion en réponse aux informations reçues sur l'altitude et/ou la pression de cabine détectées.

2. Cafetière selon la revendication 1 destinée à être utilisée sur un aéronef.

3. Cafetière selon la revendication 2, dans laquelle le système reçoit lesdites informations directement des équipements de l'aéronef.

4. Cafetière selon la revendication 1, dans laquelle le système reçoit lesdites informations d'un bus de données.

5. Cafetière selon la revendication 1, dans laquelle le système reçoit lesdites informations par le biais d'une entrée manuelle.

6. Cafetière selon la revendication 1, dans laquelle l'élément chauffant (120) est configuré pour infuser le café à une première température et à une seconde température.

7. Cafetière selon la revendication 6, dans laquelle l'élément chauffant (120) est configuré pour infuser le café à la première température à basse altitude et à la seconde température à haute altitude.

8. Cafetière selon la revendication 1, dans laquelle lesdites informations sont reçues sur un support lisible par ordinateur tangible.

9. Cafetière selon la revendication 1, comprenant en outre :
(a) une mémoire (106) comprenant un support de stockage lisible par ordinateur incluant de manière tangible le code représentant lesdites informations et comprenant en outre des instructions exécutables ;
(b) un processeur (104) configuré pour exécuter les instructions pour déterminer une configuration d'infusion sur la base desdites informations et produire un signal de contrôle vers l'élément chauffant de la cafetière (120).
